# EUROPEAN PATENT SPECIFICATION

(11) **EP 2 930 273 B1**
(45) Date of publication and mention of the grant of the patent: **09.05.2018**
(21) Application number: 15161418.7
(22) Date of filing: 27.03.2015
(51) Int. Cl.: E02B 17/02, E02D 27/42, F03D 13/20, E02B 17/00

(54) **GRAVITY BASED FOUNDATION FOR AN OFFSHORE INSTALLATION**
FUNDAMENT AUF SCHWERKRAFTBASIS FÜR EINE OFFSHORE-ANLAGE
FONDATION BASÉE SUR LA GRAVITÉ POUR UNE INSTALLATION EN HAUTE MER

(30) Priority: 07.04.2014 NL 2012573
(43) Date of publication of application: 14.10.2015
(73) Proprietor: Koninklijke BAM Groep N.V., 3981 AZ Bunnik (NL)
(72) Inventor: van Rijen, Josephus Fredericus Maria, 2801 SC Gouda (NL); Nguyen, Nhut Quang, 2801 SC Gouda (NL)
(74) Representative: EP&C

(56) References cited:
- EP-A2- 2 310 670
- WO-A1-2010/019050
- GB-A- 2 451 191
- GB-A- 2 493 023
- JP-A- 2001 271 366
- KR-B1- 100 946 940
- US-A1- 2004 169 376
- US-A1- 2011 158 750

## Description

### General field of the invention

The present invention relates to a gravity based foundation for an offshore installation.

More specifically, the invention has been developed in relation to a gravity based mono shaft foundation for an offshore installation. But it is to be noted that the gravity based foundation according to the invention might be applied to multi shaft foundations as well.

In the context of this application a mono shaft foundation is a foundation having a single column, called in this application the shaft, to support an offshore installation on/in the sea bed. As such these columns might be piled into the sea bed, which foundations are also known as 'mono piles', whilst the column is called a pile. However, the present invention is directed to a so called gravity based foundation, which gets its stability from its mass. In general, a gravity based foundation is a foundation on the basis of a caisson, which is often produced on shore - although off shore, in shore, more general afloat or otherwise is possible as well -, is self-buoyant and towed to deeper water, is sunk down onto the seabed, and installed on the seabed.

### Background of prior art

With so called 'mono piles' a pile driver is used to drive the pile into the seabed with a ram acting on the upper end of the pile. As a result the upper structure, like a wind turbine, cannot be mounted directly onto the upper end of the pile. A transition piece is used. This transition piece is in fact a tube having a diameter slightly larger than the diameter of the upper end of the pile. A flange on top of the transition piece allows the upper structure to be secured using nuts and bolts. The transition piece is mounted to the pile by means of grout. In case of wind turbines, the tower will rock and vibrate due to dynamic loads from waves and wind, which may result in crumbling of the grout. The piles are in general from concrete or steel. Steel having the advantage that it provides large strength at, relative with respect to concrete, small diameters.

An alternative for a piled foundation is a gravity based foundation. Gravity based foundations are used with wind turbines as well. A gravity based foundation for deeper water comprises a caisson of concrete as well as a shaft of concrete. Viewed in the horizontal plane, the caisson has, in general, a circular cross section. The topside of the caisson or the entire caisson has, in general, the shape of a truncated cone. The shaft extends from the top of the cone upwards, in general, to some metres above sea level. As shown in amongst others EP-1,777,348 and EP-2,559.814, the shaft does not extend inside the caisson as the lower end of the shaft ends at the top of the truncated cone. The caisson and shaft are both made from concrete. Taking into account the size of these foundations, the caisson and shaft are cast in a stepwise or sequential process, but on the end form an integral concrete structure. On top of the shaft a flange or other connection is provided for mounting the upper structure, like a wind turbine. So a transition piece can be dispensed with.

In general the gravity based foundation is made on shore - although off shore, in shore, more general afloat or otherwise is possible as well - and has a hollow structure to be self-buoyant so that it can be transferred to its destination in a floating condition. At its destination, water is allowed into the caisson so that it sinks down to the bottom and after arrival on the bottom the water is replaced by ballast material, such as sand, to ballast the foundation.

With these concrete mono shaft foundations, the shaft has typically a diameter in the range of 12-15 metre or even larger when applied as foundations for wind farms currently under development. These shafts with large diameter results in the water acting with high hydrodynamic load onto the shaft. This can be limited by using steel for the shaft, which allows a considerable reduction in diameter to about half the diameter of a concrete shaft as well as a different weight distribution.

GB 2,493,023 discloses a gravity based foundation structure for a wind turbine. The foundation structure comprises a steel tube and four cylindrical pontoons surrounding the base of the steel tube. The foundation structure is further provided with upper and lower support structures at the top and bottom of the cylindrical pontoons. These support structures are in the form of horizontal flat concrete slabs which are integrally formed with all four of the pontoons and fill the gap between the cylindrical portions of the pontoons and the steel tube.

### Summary of the invention

The aim of the present invention is to provide an improved gravity based foundation with a caisson of concrete and a shaft of steel. A further aim of the invention is to provide such a foundation, which is able to reliably resist large cyclic loads and resulting bending moments acting on the foundation and the upper structure.

One or more of the above aims are, according to the invention achieved by providing a gravity based foundation, especially a gravity based mono shaft foundation, for an offshore installation, like a wind turbine;
wherein the foundation comprises a caisson of concrete and a shaft of steel;
wherein the caisson has a bottom slab, a roof and a side wall extending between the bottom slab and roof to define a hollow structure delimited by the bottom slab, the roof and side wall;
wherein the roof has a passage for the shaft, which passage is circumscribed by a border and wider than the diameter of the shaft;
wherein a space is defined between the border of the passage and the shaft;
wherein the shaft has a lower end and an upper end;
wherein the shaft extends with its lower end through the passage into the caisson;
wherein the shaft is supported by the caisson at a lower support providing lateral support to the lower end of the shaft and an upper support;
wherein the upper support comprises concrete casting closing the space between the border of the passage and the shaft;
wherein the upper support extends all around the shaft and is arranged at the passage;
wherein the upper support further comprises radial reinforcement bars distributed around the shaft, projecting from the roof in radial inward direction, fastened to the roof and embedded in the concrete casting; radial elements distributed around the shaft, projecting from the shaft in radial outward direction, fastened to the shaft and embedded in the concrete casting; and optionally further elements embedded in the concrete casting;
wherein the radial reinforcement bars, radial elements, further elements and concrete casting being arranged to transfer radial tensile forces from the radial elements to the radial reinforcement bars in order to transfer the radial tensile forces from the shaft to the roof; and
wherein the roof is arranged to transfer the tensile forces to the side wall.

The foundation according to the invention consists of a concrete caisson supporting a single shaft of steel. The caisson has a bottom slab, a roof wall and a side wall extending between the roof wall and bottom slab. The bottom slab, roof and side wall define a hollow structure to provide buoyancy to the caisson. Hollow does not exclude the presence of compartment walls or other structures inside the caisson. Hollow also does not exclude the structure - as normally will be the case for a foundation in use - being filled with water, sand or another fill material for ballasting so that the foundation sinks to and stays on the bottom of the water. Viewed in the horizontal plane, the caisson might have a circular shape/circumference. Although the roof might have a flat shape, the roof will in general have a frusto conical shape. In case the roof might extend down to the bottom slab, the lower edge of the roof can be considered as being the side wall.

The roof is provided with a passage for the shaft and the bottom slab is provided with lower support to provide the shaft lateral support. Such a lower support might be realized as a ring extending around the lower end of the shaft and fixed to the bottom slab, for example a concrete ring formed integrally with the bottom slab. The lower support might also be a recess in the bottom slab. Both the ring and recess will have inner dimensions mating with the outer dimensions of the lower end of the shaft. Also other realizations of the lower support are very well conceivable.

In the roof, more precisely at the border of the passage in the roof, there is provided, at the upper side of the caisson, an upper support for the shaft. This upper support comprises concrete closing or filling the space between the border of the passage and the shaft to provide a sealing of this space. Further the upper support extends around the shaft - so it might be said to be ring shaped - and is arranged at the passage to transfer tensile forces from the shaft to the roof such that the said sealing is maintained when transverse loads due to wind, water and possibly other forces act on the shaft. The upper support is especially arranged:
- to transfer tensile forces in a radial and/or tangential and/or axial direction, wherein radial, tangential and axial is defined with respect to the shaft;
   and/or
- such that - after placing of the foundation on the bottom of the water and providing an offshore installation, like a wind turbine, onto the foundation - the sealing of the upper support is, at a depth of at least 5 m, such as at least 10 m, like 20 m or more below water level, maintained with transverse wind and/or water loads of 2 MN (mega Newton) or more;
   and/or
- such that - after placing of the foundation on the bottom of the water (for example the seabed) and providing an offshore installation, like a wind turbine, onto the foundation - the sealing of the upper support is, at a depth of at least 5 m, such as at least 10 m, like 20 m or more below water level, maintained with a horizontal load of 15 MN experienced, at the level of the upper support, by the shaft.

The term 'a horizontal load experienced, at the level of the upper support, by the shaft' is meant to be the 'horizontal force component' resulting, at the level of the upper support, due to wind and water loads acting on the shaft and offshore installation placed on top of the shaft. This 'horizontal force component' is a kind of imaginary force representing (part of) other forces acting at other locations on the shaft and offshore installation placed on top of it. More in general, the wind forces, water forces and possibly other forces acting on the shaft and/or the offshore installation on top of the shaft will cause, viewed at the level of the upper support, a so called 'upper transfer load' acting from the shaft on the upper support. In general this 'upper transfer load' will be composed of - at least -:
- a 'horizontal force component' expressed in N (=Newton) - also called the 'horizontal load' -,
- a 'vertical force component' expressed in N, and
- a 'horizontal moment component' expressed in Nm (= Newton metre).

The water and wind will - depending on their directions - exert an essentially horizontal load force to the shaft, resulting in a load moment experienced by the shaft. The upper support and lower support will together counteract the load forces and load moment by exerting supporting forces as well as a supporting moment on the shaft in order to withstand the load exerted by the water and wind. The supporting forces at the lower support are provided by the lower support. The lower support might according to a further embodiment - to be discussed further below - be a plug integral with the slab. The supporting forces at the upper support are provided entirely by the roof. Taking into account that the wind and water will tend to push down the shaft laterally, the shaft will tend to exert a pressure force(s) onto the roof at the border of the passage. Due to the (much) smaller lever arm, the horizontal reaction forces at roof and plug level are higher than the wind and wave loads exerted on the shaft. Because the upper support is able to withstand and absorb tensile forces, the pressure force(s) exerted onto the roof will have a magnitude smaller than if the upper support cannot absorb tensile forces. This means that the roof is more effectively used to support the shaft, resulting in the possibility to reduce dimensions, like thickness, of the roof, and/or to reduce the number of reinforcement bars, and/or to dispense with pre-stressing and/or to withstand higher loads whilst maintaining the dimensions, reinforcement bars, pre-stressing etcetera of the roof.

Further, the upper support transferring radial tension forces also counteracts deformation of the shaft due to reactive pressure forces acting on the shaft at the location of the upper support in reaction to transverse loads on the shaft.

With respect to the term 'tensile forces' it is noted that the tensile forces transferred by the upper support might - and in practise likely will - be in a direction slanting with respect to the length direction of the shaft, for example when the roof is slanting, for example frusto conical. As is commonly known in the representation of forces with respect to an imaginary axis, such a slanting (tensile) force can be represented by an axial component and a radial component.

As a skilled man realizes, such upper support can be arranged to transfer tensile forces from the shaft to the roof by providing draw bars or draw wires extending from the shaft to the roof, which are fastened to both the shaft of steel and the roof of concrete. Subsequently, the section between the roof and shaft can be filled up with concrete in order to close this section in sealing manner.

However, taking into account the knowledge of concrete/steel engineering, a skilled man has also available many other techniques to realize a transfer of tensile forces between the steel shaft and concrete roof via an intermediate part comprising concrete. In this respect the following is noted:
- As such it is known that concrete itself has a relatively low tensile strength. The prior art teaches however many solutions for improving the tensile strength of concrete structures so that it can withstand and transfer up to very high tensile forces. For example, concrete can be reinforced by reinforcement bars and/or reinforcement fibres embedded in the concrete.
- It is also known that sequentially cast concrete elements can be connected to each other by 'projecting reinforcement bars', which project from the concrete element cast first and are embedded in the subsequently cast second concrete element. As such these 'projecting reinforcement bars' can transfer tensile forces from the first concrete element to the second concrete element by mechanically coupling and/or by lap joint. In mechanical coupling a reinforcement bar projecting from a concrete element cast first is mechanically connected to a further reinforcement bar extending and embedded inside the second concrete element. For example so called Lenton couplers can be used, which provide a screw thread connection between two aligned reinforcement bars. In lap joint, there is no direct contact between reinforcement bars required. By arranging two reinforcement bars partly in an overlapping parallel configuration, sufficiently close to each other inside concrete, transfer of tensile force applied on one bar to the other bar can take place via the intermediate concrete in between the two bars. To a large extent, the transfer in the intermediate concrete will in this case be by shear forces. In order to improve the grip of the reinforcement bars it is known to use reinforcement bars with a profiled outer surface.
- Further, the prior art also teaches several techniques for connecting steel structure elements to concrete. Basically this can be done by providing the concrete element with connectors projecting from the concrete element and subsequently connecting these connectors mechanically or otherwise to the steel structure element, or by first providing the steel structure element with projecting connectors to be embedded in the concrete element when cast. Some of these techniques just provide a connection, whilst others of these techniques allow substantial tensile forces to be transferred between the steel structure element and the concrete element.
These techniques as well as other techniques readily available to the skilled man can be used stand alone or in combination to achieve an upper support capable to transfer radial and/or axial tensile forces from the shaft to the roof.
According to a further embodiment of the invention, said upper support is arranged to be able to transfer, from the shaft to the roof, an amount of tensile forces of at least 1.5 MN. In this respect it is noted that in practice this condition can be verified experimentally on a real foundation by exerting a testing load, like one consisting of only a horizontal testing force, on the shaft at the location of the upper support and measuring in the upper support whether it is able to transfer a tensile force of at least 1.5 MN. Practically, this can also be verified on a scale model or on the basis of computer simulation, such as a computer simulation on the basis of a finite element model.

According to a further embodiment of the invention, the upper support is arranged to be able to absorb, as a tensile force, at least 10%, such as at least 15%, of a horizontal load of 15 MN inside the upper support and to transfer this tension to the roof. In practice, the upper support might be able to absorb at least 30%, or at least 35%, of such a horizontal load as a tensile force. The load in this respect is considered to be directed in a direction transverse to the length direction of the shaft. Further, during use this horizontal load will be one of the so called 'reaction forces' resulting from wind and/or water and/or other external loads acting on the foundation and offshore construction. However, for testing or simulation purposes, this horizontal load might be a force applied in horizontal direction on the shaft at the level of the upper support. In this respect it is noted that in practice these conditions can be verified experimentally on a real foundation by exerting a testing load, consisting of only a horizontal testing force of 15 MN, on the shaft at the location of the upper support and measuring in the upper support the amount of tensile forces and expressing this amount as a percentage of the testing force of 15MN. Practically, these conditions can also be verified on a scale model or on the basis of computer simulation, such as a computer simulation on the basis of a finite element model.

According to a further embodiment of the invention, wherein, viewed at the level of the upper support, an upper transfer load is defined as:
- acting from the shaft on the upper support; and
- comprising one or more components from the group of:
   o a horizontal force component,
   o a vertical force component, and
   o a horizontal moment component;
   the upper support is arranged to distribute said upper transfer load around the circumference of the upper support and to transfer said upper transfer load distributed around the circumference of the upper support to the roof by means of a combination of:
- at least tensile forces and compressive forces acting in the upper support; and
- optionally shear forces acting in the upper support.
In this respect, it is to be noted that 'distributed around the circumference of the upper support' does not mean that the distribution must be homogeneous. In practice the transfer of forces from the shaft to the upper support will take place at 'discrete locations' distributed, at mutual intervals, around the circumference. Further it is to be noted, that a 'horizontal force component' of an 'upper transfer load' will on one side of the shaft be absorbed by pressure forces and on the opposing other side by tensile forces, whilst in between these sides it will be absorbed by a - changing - mixture of compressive, shear and tensile forces. This example makes clear that as such the tensile forces and compressive forces as well as shear forces will - in general - not be distributed evenly around the circumference of the upper support.

According to further embodiments of the invention, the upper support will, in case of a horizontal force component (Rᵤₚₚₑᵣ) of 10 MN, absorb
- at least 10%, such as at least 15%, of this horizontal force component (Rᵤₚₚₑᵣ) as tensile forces (T);
   and/or
- at least 7%, such as at least 10%, of this horizontal force component (Rᵤₚₚₑᵣ) as shear forces;
   and/or
- at least 20%, such as at least 30%, of this horizontal force component (Rᵤₚₚₑᵣ) as compressive forces (P);
   and/or
- at most 75%, such as at most 60%, of this horizontal force component (Rᵤₚₚₑᵣ) as tensile forces (T).
In this respect it is noted that in practice these conditions can be verified experimentally on a real foundation by exerting a testing load, consisting of only a horizontal testing force of 10 MN, on the shaft at the location of the upper support and measuring in the upper support tensile, shear and/or compressive forces. Practically, these conditions can also be verified on a scale model or on the basis of computer simulation, such as a computer simulation on the basis of a finite element model.

According to a further embodiment of the invention, a said radial element might comprise a U-shaped bar extending in a radial plane. The free ends of the legs of such a U-shaped bar might point to the shaft, whilst the curved part of the U-shaped bar holds concrete together for better withstanding tensile forces.

According to a further embodiment of the invention, a said radial element comprises at least one L-shaped bar extending in a radial plane. The free end of the long leg of the L-shaped bar will in general be directed to the shaft, whilst the short leg of the L-shaped bar serves the purpose of holding together concrete subjected to tensile forces. According to a still further embodiment of the invention, said radial element might comprise two or more of said L-shaped bars. In case of two said L-shaped bars, both L-shaped bars have a free end, the free end of one of said L-shaped bars pointing in a direction opposite the free end of the other of said L-shaped bars.

According to a further embodiment of the invention, a said radial element comprises a radial fin welded to the shaft. According to a still further embodiment of the invention, the fin is provided with:
- a first plate welded to the fin and extending transverse to the fin and transverse to the tensile direction; and
- one or more second plates welded to the fin and extending transverse to the fin as well as transverse to the first plate;
wherein a U-shaped bar according to the invention and/or at least one L-shaped bar according to the invention are fastened to the first plate at that side of the first plate facing away from the shaft; and wherein the one or more second plates support the first plate at the side facing away from the shaft to prevent bending of the first plate due to tensile forces exerted on the U-shaped bar and/or one or more L-shaped bars, respectively.

As indicated already earlier, the cross section of the caisson might, according to an embodiment of the invention, have a circular shape, and the upper part of the caisson might have a frusto conical shape.
According to a further embodiment of the invention,
- the footprint of the caisson on the bottom of the water/sea might have a diameter larger than 20 m, such as in the range of 30-60 m, like 30-40 m;
   and/or
- the vertical height of the shaft might be larger than 40 m, like 50-80 m or larger for water depth of 30-60 m;
   and/or
- the vertical height of the caisson might be larger than 15 m, such as 20 m or larger, like in the range of 15-30 m;
   and/or
- the plug might have a vertical height of 1-4 m, such as 1-2 m or larger.

According to a further embodiment of the invention, the lower support comprises a concrete plug provided in the lower end of the shaft, wherein, viewed in a plane transverse to the shaft, the outer dimensions of the plug and the inner dimensions of the lower end of the shaft mate each other. According to a still further embodiment, this plug might be a plug projecting from the bottom slab upwards into the lower end of the shaft and formed as an integral part with the concrete bottom slab of the caisson, such that the plug provides lateral support to the lower end of the shaft. When the shaft is subjected to a lateral load due to wind and or water, the lower support will exert a reaction force on the lower end of the shaft. The plug provided in the lower end of the shaft prevents deformation due to this reaction force due to the outer dimensions of the plug being essentially the same as the inner dimensions of the lower end of the plug. Making the plug as an integral part of the bottom slab, results in the plug providing lateral support to the lower end of the shaft preventing the lower end of the shaft from moving in a horizontal direction with respect to the caisson. Of course the outer dimensions of the plug will, at least during assembling of the foundation, be a little smaller than the inner dimensions of the lower end of the shaft in order to allow easy insertion of the plug into the lower end of the shaft (or the other way around easy passing of the lower end of the shaft along the plug). In order to prevent unallowable play between the plug and the lower end of the shaft, this space will be filled up with concrete or another filler. The plug provides a lower support for the shaft.

According to a further aspect, the invention also relates to an assembly of a gravity based foundation according to the invention, as well as a wind turbine, the wind turbine comprising a vertical tower carrying a turbine at its upper end, wherein the lower end of the tower is supported on the upper end of the shaft of the foundation.
With respect to the present invention, it is noted that the gravity based foundation will, as is presently contemplated, be made on shore - although off shore, in shore, more general afloat or otherwise is possible as well -. Further, the gravity based foundation according to the invention has a hollow structure to be self-buoyant so that it can be transferred to its destination in a floating condition. At its destination, water is allowed into the caisson so that it sinks down to the bottom and after arrival on the bottom the water is replaced by ballast material, such as sand, to ballast the foundation. In order to improve and/or influence the stability and floating behaviour of the foundation during transportation in floating condition, water can optionally be allowed into the caisson before or during transportation. The amount of water allowed into the caisson before or during transportation might be less than the amount allowed into the caisson for sinking it down.

For the purpose of testing and designing as well as for the purpose of the so called 'sufficiency of disclosure' as is required for a patent - like the requirement of Art 83 EPC -, it is noted that the 'upper transfer load' and its components (horizontal force component Rᵤₚₚₑᵣ, vertical force component Vᵤₚₚₑᵣ and horizontal moment component Mᵤₚₚₑᵣ) are testing loads applied to the shaft at the level of the upper support, whilst the foundation is above water and not yet filled with the ballast material, like water and sand, used for sinking the foundation to the bottom and installing it on the bottom. This applies for all loads mentioned in the claims and description of this application. As indicated already several times, such test loads can be applied - in life testing - on a real foundation by exerting the test load on the shaft at the location of the upper support and measuring in the upper support tensile, shear and/or pressure/compressive forces. Instead of life testing, tests can also be applied on a scale model or by computer simulation, such as a computer simulation on the basis of a finite element model.

### Short description of the drawings

The present invention will be further described below, with reference to the drawings. In these drawings:
Figure 1 shows a perspective view on a cross section of a foundation according to the invention provided with a wind turbine;
Figure 2 shows as a detail a perspective view of a part of the foundation of figure 1;
Figure 3 shows as a detail, in cross sectional view one embodiment for realizing the transfer of tensile force;
Figure 4 shows in cross sectional side view (figure 4A) and perspective view (figure 4B), and top view (figure 4c) details of another embodiment for realizing the transfer of tensile force; and
Figure 5 illustrates highly schematically an example of the loads and reaction forces acting on a foundation carrying a wind turbine; figure 5A showing a side view and figure 5B showing cross section of the shaft at the level of the upper support.

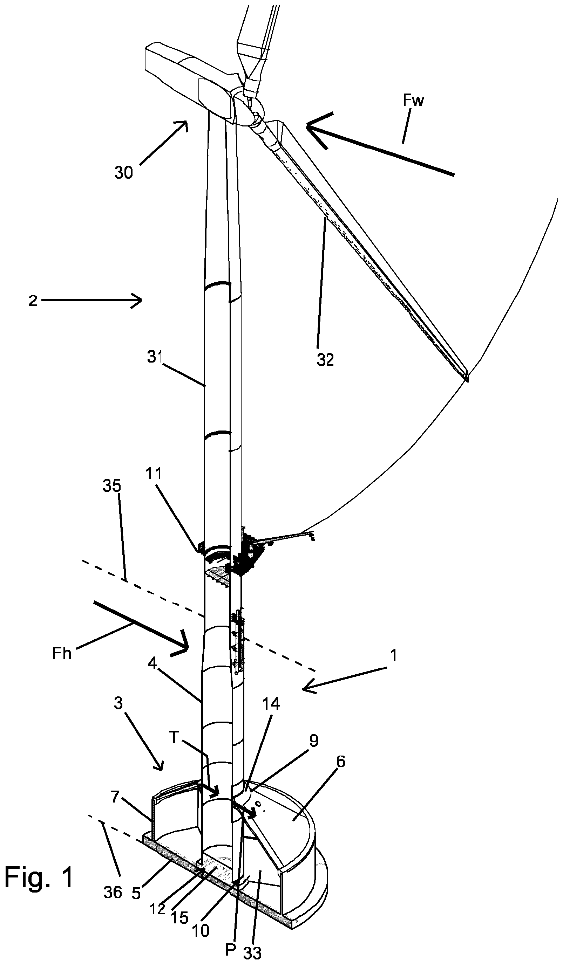

Figure 1 shows in perspective cross section a gravity based foundation 1 according to the invention. The foundation 1 shown consists of a caisson 3 and a shaft 4. The foundation 1 has been made on shore. The caisson 3 and shaft 4 assembled together into a unit have been brought to its destination off shore over water. Due to their hollow structure, the assembly of caisson 3 and shaft 4 is self-buoyant and can be towed to its destination offshore by tugs or other vessels. Arrived at its destination, water is allowed to enter the caisson 3, so that the caisson 3 and shaft 4 sink to the sea bed 36. The upper end 11 of the shaft 4 remains projecting above the sea level 35. Subsequently the water inside the caisson 3 and in general also the water inside the shaft 4 is replaced by a ballast mass, like sand. For clarity reasons, the sand inside the caisson 3 and shaft 4 has not been shown.

After installing the foundation 1 at its position on the sea bed 36, an off shore installation 2 has been installed on the upper end 11 of the shaft 4. In the embodiment shown, the off shore installation is a wind turbine 30 of a wind farm. The wind turbine has a so called tower 31 carrying the turbine 32.

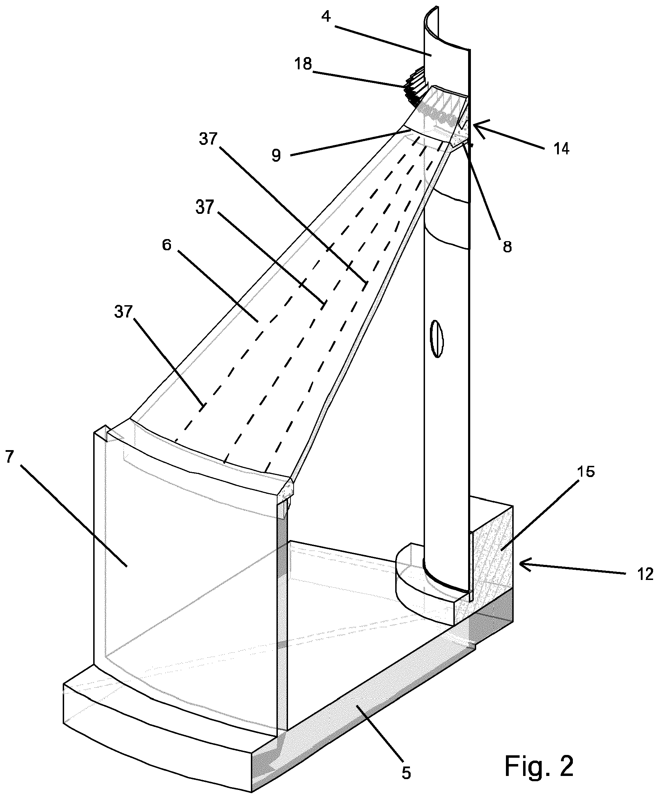

As can be seen in figures 1 and 2, the caisson is defined by a bottom slab 5, a roof 6 or roof wall 6 and a side wall 7 extending between the bottom slab 5 and roof 6. Although the roof 6 might have any shape, like a flat wall extending horizontally, it is preferred that the roof 6 is tapering in upward direction towards the shaft 4. In the embodiment shown, the roof 6 has a frusto conical shape.

The caisson as a whole can be made of concrete. Taking into account that the bottom slab 5 of the caisson might have a diameter of 30-40 m and that the vertical height of the caisson 3 might be about 20 m, it is clear that such a concrete caisson will in general be made stepwise or sequentially. For example the bottom slab 5 will be made first. Subsequently the side wall 7 can be made by casting it on site onto the bottom slab 5, but the side wall 7 might also be erected from pre-fabricated side wall elements, which are placed onto the bottom slab 5 and joined by casting concrete in the gaps at the connections between adjacent side wall elements. As a next step the roof 6 might be cast on site or assembled from prefabricated roof elements, which are placed on the side wall 7 and joined by casting concrete in the gaps at the connections between adjacent roof elements. In similar manner, the roof 6 or roof elements are attached to the side wall 7 by casting concrete at the connections between roof 6 and side wall 7. As such, this making of such a foundation on shore is known and can be done in several other manners as well. Further it is noted that not the entire caisson is required to be made of concrete.

As can be seen further in figures 1 and 2, the caisson comprises partitions 33 extending vertically and radially. These partitions serve amongst others the purpose of preventing water or other ballast inside the caisson to flow to other parts of the caisson, which might cause instability of the caisson especially when it is floating or sinking or being submerged.

The shaft 4 is made of steel. Hydrodynamic forces due to waves and other water movements will act on the shaft 4 and are represented as arrow Fₕ. Further, a dynamic load due to wind will act on the shaft 4 and is represented as arrow F_{w}. The hydrodynamic forces Fₕ and wind forces F_{w} can act in any direction. These directions might be mutually different - as indicated in fig. 1, showing opposite directions as an example - but the directions might also be the same. The foundation 1 should resist this load resulting from hydrodynamic forces Fₕ and wind forces F_{w}. This means that this load Fₕ, F_{w} is transferred from the shaft 4 to the caisson 3. This transfer takes place at the locations where the shaft 4 is supported by the caisson 3. According to the invention this is in a lower support 12 and an upper support 14.

The lower support 12 comprises a plug 15, which might be of concrete. Viewed in the horizontal plane, the outer dimensions of this plug 15 mate the inner dimensions of the lower end 10 of the shaft 4, so that the plug prevents deformation of the lower end of the shaft 4 due to reaction forces acting on the lower end of the shaft 4. As the plug 15 is fixed to the slab 5 - for example by making the plug of concrete as a part formed integral with the concrete slab -, the plug also provides lateral support to the shaft 4. The plug 15 might have a vertical height of 1 to 3 metres or more.

The upper support 14 is arranged at the transition between the concrete roof 6 and the steel shaft 4. The concrete roof 6 is provided with a passage 8 (figure 2) for the shaft 4. As during assembly, the shaft 4 is added to the foundation after making the caisson 3, the passage in the roof is wider than the diameter of the (lower end 10 of the) shaft 4 requires. At this stage the passage 8 is defined by a border 9 formed by the concrete of the roof 6. In a later stage, this space remaining between the roof 6 and shaft 4 may be filled or bridged with concrete as well.

When a load Fₕ, F_{w} is acting on the shaft 4, the shaft 4 will be pushed in the direction of the resultant of the load Fₕ, F_{w}, resulting in a pressure force P exerted by the shaft 4 on the upper support 8. The effect of such pressure force P is amongst others that the shaft 4 might deform at the location of the upper support 4 and/or that the upper support is compressed/deformed, and/or that at the side of the upper support opposite to the location where the pressure force P is acting a gap might be caused in the upper support. Dynamic effects of the load Fₕ, F_{w}, would cause a pumping effect through the gap, so that the exchange of water deteriorates the upper support, shaft and or roof by erosion.

According to the invention, the upper support is arranged to be able to absorb considerable tension forces - shown as arrow T in figure 1 - in at least a radial direction. This absorbing of tension forces T has several effects. One effect is that deformation of the shaft 4 at the location of the upper support 14 is counteracted. A second effect is that the formation of said gap is prevented. A third effect is that the whole circumference of the upper support contributes in absorbing the load Fₕ, F_{w} instead of only a quarter up to half of the circumference. This means that either the upper support 14 can be dimensioned lighter/smaller or the upper support 14 is capable of absorbing more load Fₕ, F_{w} or - of course - a combination of both.

The tensile forces T absorbed by the upper support, of course, must be transferred to the side wall 7 in order to be able to transfer it to the sea bed 36. For this purpose, the strengthening bars 37 - see dashed lines in figure 2 showing only three of the multiple strengthening bars 37 - can be used. These strengthening bars 37 will in general otherwise also be present in such structures as, viewed from the side wall 7 to the shaft 4 along the roof 6, the length of these roof elements will be several metres. However, also other manners of providing the roof 6 with capability to transfer tensile forces T are envisaged and possible. For example, one might use instead of or in supplement to reinforcing bars 37 tensioning wires or bars extending outside the concrete of the roof 6 or extending freely through the concrete roof 6.

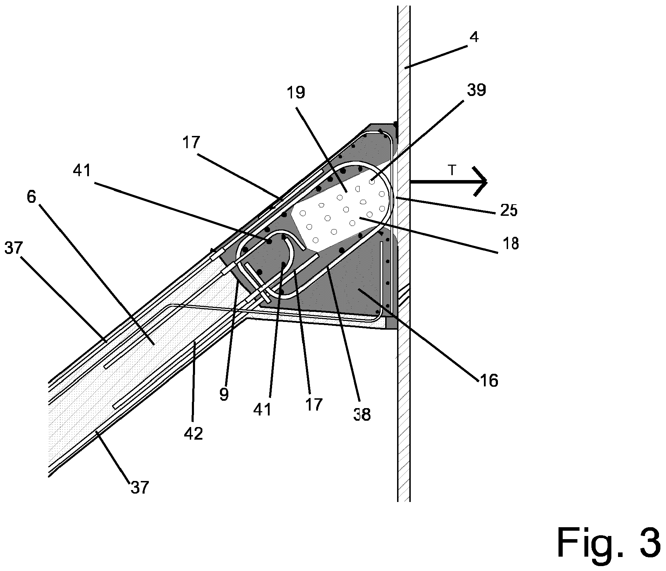

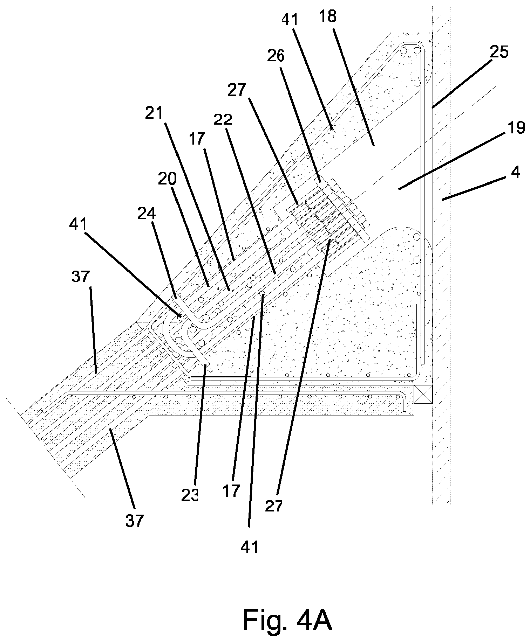

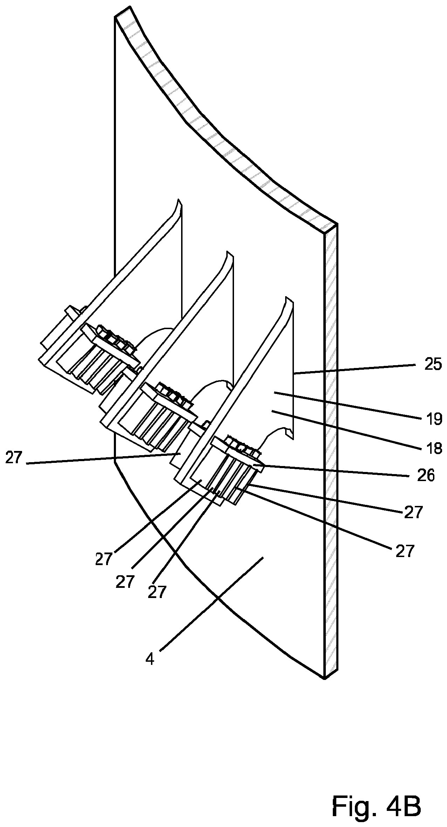

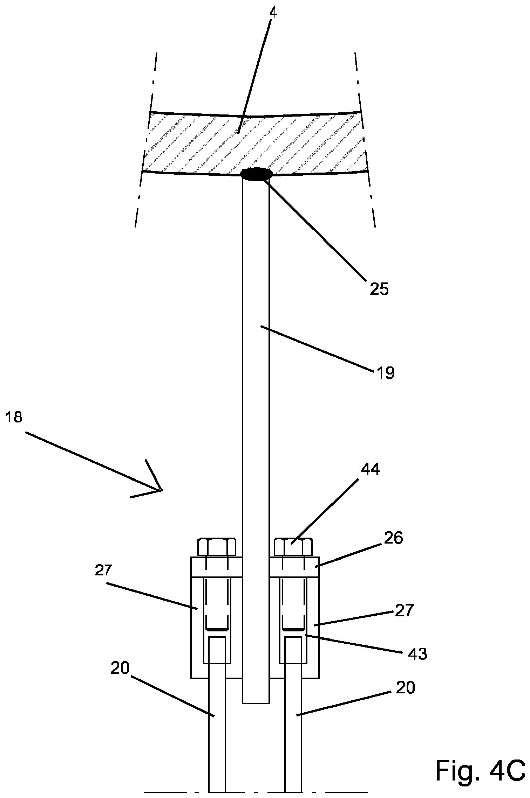

The capability of the upper support 14 according to the invention to absorb and transfer tension forces T can, as elucidated before, be achieved in several manners. Figure 3 shows one possible manner to achieve this, and figure 4 shows another - presently preferred - manner to achieve this.
Figure 3 shows an upper support 14 having the interspace between the roof 6 and shaft 4 filled with concrete casting 16, shown coloured as grey. The shaft 4 is provided with a number of radial elements 18 (see also fig 2) welded with a weld 25 to the steel shaft 4. For example about 30-40 of these elements 18 might be provided distributed around a shaft 4 of about 6 m diameter. These radial elements consist of a plate 19, called a fin 19, which is, according to the embodiment shown in figure 3, provided with a plurality of studs 39 provided at both sides of the fin 19. The studs might for example have a diameter of 22 mm cm and an approximate length of 20 cm. The roof 6 is provided with a plurality of reinforcement bars 37 extending in the direction of slope of the roof. These reinforcement bars 37 project into the concrete casting 16 of the upper support 14, the projecting parts being indicated as reinforcement bars 17. At each side of a fin 19, a bar in the form of a loop shaped brace 38 with overlapping ends is provided. Further two or more L-shaped bars might have been provided. The fins 19 with studs 39, reinforcement bars 17, L-bars 42, braces 38 and concrete casting 16 together ensure transfer of pressure, tension and shear forces from the shaft 4 to the roof 6. In order to maintain integrity of the concrete casting 16 in circumferential direction of the upper support, a plurality of circumferential reinforcement bars 41 might have been provided.

Referring to figures 4A, 4B and 4C, the upper support 14 can also be designed differently. The radial elements 18 are in figure 4 different from the radial elements 18 in figure 3. The fins 19 are still present, but the studs 39 are absent. The fin 19 is at both, opposing sides provided with a first plate 26 welded to the fin 19 and extending transverse to the fin 19. At the side of the first plate 26 which faces the roof 6, support plates 27 are provided. In this example each fin 19 has five support plates 27 on each side, see figure 4B. These support plates 27 are also welded to the fin 19 and extend transverse to the fin 19. The first plate 26 carries a U-shaped bar 20 having both ends mounted to the first plate by means of a bolt connection 43, 44, see figure 4C for details. The first plate 26 further carries two L-shaped bars 21, 22, having one end mounted to the first plate 26 by a bolt connection 43, 44. The free ends 23, 24 of these L-bars face in opposing directions. The fins 19, first plates 26, second plates 27, U-bars 20, L-bars 21, 22, reinforcement bars 17 and concrete casting 16 together provide the transfer of tensile forces T as well as shear forces and pressure forces from the shaft 4 to the roof 6.

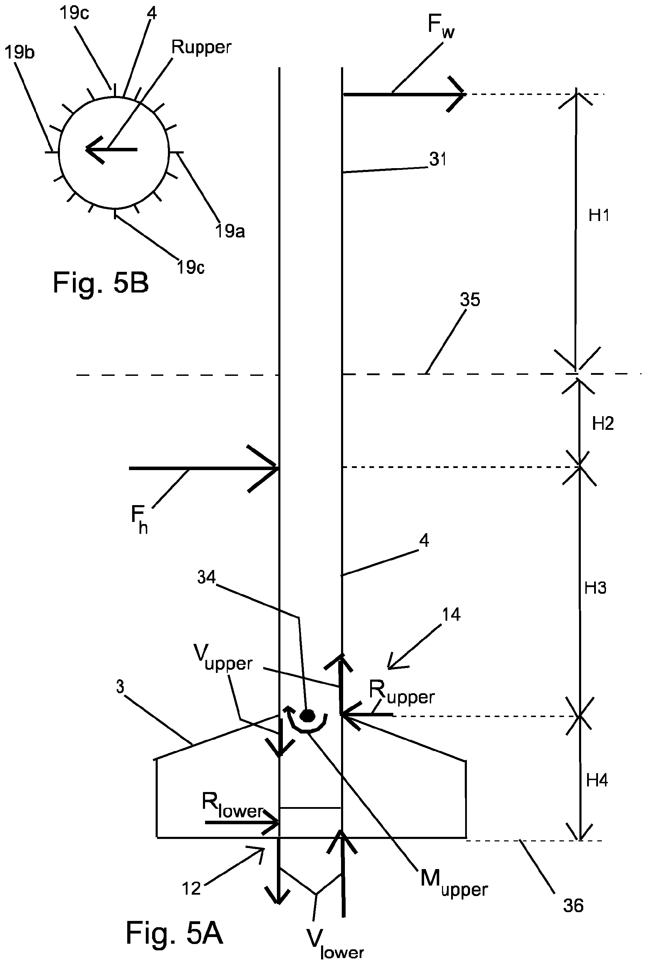

Figure 5A shows schematically, on high level and without being complete an example of loads acting on and in a foundation and wind turbine 31 according to the invention.

The wind acting on the wind turbine is represented by arrow F_{w} and assumed to act at a height H1 of about 100 m above the sea level 35. Forces due to wind might reach high values, F_{w} might for example have a force of 2 MN (MN= mega Newton). The water acting on the shaft 4 is represented by arrow Fₕ and assumed to act at a height H2 of about 10 m below the sea level 35. Forces due to the water (like due to waves, tides, flows etcetera) might reach high values as well, Fₕ might for example have a force of 3 MN (MN= mega Newton). The sea bed 36 is in this example at a depth (H2+H3+H4) of 50 m, whilst the height H4 of the caisson - i.e. the height of the level of the upper support - is 20 m, so that Fₕ is assumed to act at H3 is 20 m above the upper support 14. The diameter of the shaft 4 at the level of the lower support 12 and upper support 14 is in this example about 7m (7 metre).

These wind and water loads F_{w}, Fₕ result in reaction forces and reaction moments between the shaft 4 and caisson 3 at the locations where the shaft is supported by the caisson. These locations are the upper support 4 and lower support 2.
The connection at the lower support between the shaft 4 and slab 5 via the plug 4 can be regarded as a so called 'fixed beam connection'. Due to the wind and water load, the plug/slab will, at the level of the lower support, exert onto the shaft at least a horizontal reaction force R_{lower}, a vertical reaction force R_{lower}, and a reaction moment (not shown) having a horizontal axis. Other reaction forces and reaction moments might be present as well.

Also the connection at the upper support 14 between the shaft 4 and the roof 3 can be regarded as a so called 'fixed beam connection'. Due to the wind and water load, the roof/upper support will, at the level of the upper support, exert onto the shaft at least a horizontal reaction force Rᵤₚₚₑᵣ, vertical reaction forces Vᵤₚₚₑᵣ, and a reaction moment Mᵤₚₚₑᵣ having a horizontal axis 34. Other reaction forces and reaction moments might be present as well.

Without going into calculative details and for simplicity leaving out other loads like the load due to the weight of the structure, the skilled man will realize that above means that the upper support in conjunction with the lower support will have to be able to deal with a moment of 200 to 400 MNm (mega Newton metre) and that this 200-400 MNm is, at the level of the upper support, to be taken up by the Rᵤₚₚₑᵣ (in conjunction with the R_{lower}), Vᵤₚₚₑᵣ and Mᵤₚₚₑᵣ. For the horizontal reaction force Rᵤₚₚₑᵣ values in the range of 10-30 MN (mega Newton) are to be expected, whilst a combination of the vertical reaction force Vᵤₚₚₑᵣ, the Mᵤₚₚₑᵣ and possibly also other reactive forces and moments will take up the remaining parts of the 200 to 400 MNm. In other words, the upper support must be able to transfer a so called 'upper transfer load' comprised of - in this example - a horizontal force component called Rᵤₚₚₑᵣ, a vertical force component called Vᵤₚₚₑᵣ and a horizontal moment component called Mᵤₚₚₑᵣ. Depending on water depth and other local circumstances, these reaction forces and reaction moments might even become much larger.

As will be clear from the above description and figure 5A, the forces and moments to be absorbed by the upper support are very, very high. According to the invention the upper support is arranged to absorb these forces and moments from the shaft and transfer them to the roof by tension forces and compressive forces, and preferably also shear forces. Taking into account only the Rᵤₚₚₑᵣ and referring to figure 5B - showing a cross section of the shaft 4 at the level of the upper support/fins 19 - this means that the roof 6/upper support 14 will not only exert a pressure reaction force onto the shaft at the side of fin 19a, but that at the opposing side, at fin 19b, the roof 6/upper support 14 will exert a tensile force onto the shaft 4. Going from fin 19b along the circumference of the shaft to fin 19a, it will be clear that approaching the fin 19c the tension forces exerted by the roof/upper support on the shaft decrease whilst shear forces exerted by the upper support on the shaft increase, and that continuing after fin 19c to fin 19a, the pressure forces exerted by the roof/upper support on the shaft increase whilst shear forces exerted by the upper support on the shaft decrease. So with the upper support of the invention a distribution of the Rᵤₚₚₑᵣ around the circumference of the shaft 4 is achieved. Similar applies for other reaction forces and reaction moments active at the level of the upper support. Taking into account that about 30-40 (or a different number) of fins will be provided around the shaft 4, it will also be clear that the transfer of forces from the shaft to the upper support takes place at discrete locations, determined by the fins.

### List of reference signs

- 1: foundation
- 2: offshore installation
- 3: caisson
- 4: shaft
- 5: bottom slab of caisson
- 6: roof of caisson
- 7: side wall
- 8: passage
- 9: border of passage
- 10: lower end of shaft
- 11: upper end of shaft
- 12: lower support
- 14: upper support
- 15: plug
- 16: concrete casting
- 17: reinforcement bar
- 18: radial element
- 19: fin
- 20: U-shaped bar
- 21: L shaped bar
- 22: L shaped bar
- 23: free end of L-shaped bar 21
- 24: free end of L-shaped bar 22
- 25: weld
- 26: first plate
- 27: second plate

- 30: wind turbine
- 31: tower
- 32: turbine
- 33: partition plate

- 35: sea level
- 36: sea bed
- 37: reinforcement bar in roof
- 38: brace
- 39: stud
- 41: circumferential reinforcement bar
- 42: L-bar
- 43: bush with internal screw thread for bolt connection;
- 44: bolt

- T: tensile force
- P: pressure force
- F_{w}: wind forces
- Fₕ: hydrodynamic/water forces
- Rᵤₚₚₑᵣ: horizontal reaction force at level of upper support
- Vᵤₚₚₑᵣ: vertical reaction forces at level of upper support
- Mᵤₚₚₑᵣ: reaction moment at level of upper support
- R_{lower}: horizontal reaction force at level of lower support
- V_{lower}: vertical reaction forces at level of lower support

## Claims

1. Gravity based foundation (1) for an offshore installation (2),
wherein the foundation (1) comprises a caisson (3) of concrete and a shaft (4) of steel;
wherein the caisson (3) has a bottom slab (5), a roof (6) and a side wall (7) extending between the bottom slab (5) and roof (6) to define a hollow structure delimited by the bottom slab (5), the roof (6) and side wall (7);
wherein the roof (6) has a passage (8) for the shaft (4), which passage (8) is circumscribed by a border (9) and wider than the diameter of the shaft;
wherein a space is defined between the border (9) of the passage (8) and the shaft (4);
wherein the shaft (4) has a lower end (10) and an upper end (11);
wherein the shaft (4) extends with its lower end (10) through the passage (8) into the caisson (3);
wherein the shaft (4) is supported by the caisson (3) at a lower support (12) and an upper support (14);
wherein the upper support (14) comprises concrete casting (16) closing the space between the border (9) of the passage (8) and the shaft (4); and
wherein the upper support (14) extends all around the shaft (4), and is arranged at the passage (8)
**characterized,**
**in that** the upper support (14) further comprises:
• radial reinforcement bars (17) distributed around the shaft (4), projecting from the roof (6) in radial inward direction, fastened to the roof (6) and embedded in the concrete casting (16); and
• radial elements (18) distributed around the shaft (4), projecting from the shaft (4) in radial outward direction, fastened to the shaft (4) and embedded in the concrete casting (16);
**in that** the radial reinforcement bars (17), radial elements (18) and concrete casting (16) are arranged to transfer radial tensile forces (T) from the radial elements (18) to the radial reinforcement bars (17) in order to transfer the radial tensile forces (T) from the shaft to the roof (6); and
**in that** the roof (6) is arranged to transfer the tensile forces (T) to the side wall (7).

2. Foundation (1) according to the preceding claim, wherein said upper support (14) is arranged to be able to transfer, from the shaft (4) to the roof (6), an amount of tensile forces (T) of at least 1.5 MN.

3. Foundation (1) according to one of the preceding claims, wherein the upper support (14) is arranged to absorb at least 10%, such as at least 15%, of a horizontal load (Rᵤₚₚₑᵣ) of 15 MN as tensile forces (T), wherein said horizontal load is directed transverse to the length direction of the shaft (4) and exerted by the shaft (4) on the upper support (14).

4. Foundation according to one of the preceding claims,
wherein, viewed at the level of the upper support (14), an upper transfer load is defined as:
• acting from the shaft (4) on the upper support (14); and
• comprising one or more components from the group of:
∘ a horizontal force component (Rᵤₚₚₑᵣ),
∘ a vertical force component (Vᵤₚₚₑᵣ), and
∘ a horizontal moment component (Mᵤₚₚₑᵣ);
and
wherein the upper support (14) is arranged to distribute said upper transfer load (Rᵤₚₚₑᵣ, Vᵤₚₚₑᵣ, Mᵤₚₚₑᵣ) around the circumference of the upper support (14) and to transfer said upper transfer load (Rᵤₚₚₑᵣ, Vᵤₚₚₑᵣ, Mᵤₚₚₑᵣ) distributed around the circumference of the upper support (14) to the roof (6) by means of a combination of:
• at least tensile forces (T) and compressive forces (P) acting in the upper support (14); and
• optionally shear forces acting in the upper support (14).

5. Foundation (1) according to claim 4, wherein, in case of a horizontal force component (Rᵤₚₚₑᵣ) of 10 MN,
• at least 10%, such as at least 15%, of this horizontal force component (Rᵤₚₚₑᵣ) is absorbed as tensile forces (T) by the upper support;
and/or
• at least 7%, such as at least 10%, of this horizontal force component (Rᵤₚₚₑᵣ) is absorbed as shear forces by the upper support;
and/or
• at least 20%, such as at least 30%, of this horizontal force component (Rᵤₚₚₑᵣ) is absorbed as compressive forces (P) by the upper support;
and/or
• at most 75%, such as at most 60%, of this horizontal force component (Rᵤₚₚₑᵣ) is absorbed as tensile forces (T) by the upper support.

6. Foundation (1) according to one of the preceding claims, wherein a said radial element (18) comprises a U-shaped bar (20) extending in a radial plane.

7. Foundation (1) according to one of the preceding claims, wherein a said radial element (18) comprises at least one L-shaped bar (21, 22), such as two L-shaped bars, extending in a radial plane, wherein, in case of two said L-shaped bars, both L-shaped bars (21, 22) have a free end (23, 24), the free end (23) of one of said L-shaped bars (21) pointing in a direction opposite the free end (24) of the other of said L-shaped bars (22).

8. Foundation (1) according to one of the claims 1-5, wherein a said radial element (18) comprises a radial fin (19) welded to the shaft (4).

9. Foundation (1) according to claim 8, wherein the fin (19) is provided with:
• a first plate (26) welded to the fin (19) and extending transverse to the fin (19) and transverse to the tensile direction; and
• one or more second plates (27) welded to the fin (19) and extending transverse to the fin (19) as well as transverse to the first plate (26);
wherein a U-shaped bar (20) according to claim 6 and/or at least one L-shaped bar (21, 22) according to claim 7 are fastened to the first plate (26) at that side of the first plate (26) facing away from the shaft (4);
wherein the one or more second plates (27) support the first plate (26) at the side facing away from the shaft (4) to prevent bending of the first plate (26) due to tensile forces (T) exerted on the U-shaped bar (20) and/or one or more L-shaped bars (21, 22), respectively.

10. Foundation (1) according to one of the preceding claims, wherein, viewed in horizontal direction, the cross section of the caisson (3) has a circular shape, and wherein the upper part of the caisson (3) has a frusto conical shape.

11. Foundation (1) according to one of the preceding claims, wherein:
• the footprint of the caisson (3) has a diameter larger than 20 m, such as in the range of 30-60 m, like 30-40 m;
and/or
• the vertical height of the shaft (4) is larger than 30 m, like 50 m or larger;
and/or
• the vertical height of the caisson (3) is larger than 10 m, such as 15 m or larger, like in the range of 15-25 m;
and/or
• the plug (15) has a vertical height of 1 - 4 m, such as 1 - 2 m or larger.

12. Foundation (1) according to one of the preceding claims, wherein the foundation (1) is self-buoyant.

13. Foundation according to one of the preceding claims, wherein the lower support (12) comprises a concrete plug (15), and wherein, viewed in a plane transverse to the shaft (4),the outer dimensions of the plug (15) and the inner dimensions of the lower end (10) of the shaft (4) mate each other.

14. Foundation according to claim 13, wherein the plug projects from the bottom slab (5) upwards into the lower end (10) of the shaft (4) and is formed as an integral part with the concrete bottom slab (5) of the caisson (3) such that the plug (15) provides lateral support to the lower end (10) of the shaft (4).

15. Offshore installation (2), comprising a gravity based foundation (1) according to one of the preceding claims 1-14, and a wind turbine (30), the wind turbine comprising a vertical tower (31) carrying a turbine (32) at its upper end, wherein the lower end of the tower (31) is supported on the upper end (11) of the shaft (4) of the foundation (1).

## Patentansprüche

1. Schwerkraftbasiertes Fundament (1) für eine Offshore-Anlage (2),
wobei das Fundament (1) einen Senkkasten (3) aus Beton und einen Schaft (4) aus Stahl umfasst;
wobei der Senkkasten (3) eine Bodenplatte (5), ein Dach (6) und eine Seitenwand (7) aufweist, die sich zwischen der Bodenplatte (5) und dem Dach (6) erstreckt, um eine von der Bodenplatte (5), dem Dach (6) und der Seitenwand (7) begrenzte Hohlstruktur zu definieren;
wobei das Dach (6) einen Durchgang (8) für den Schaft (4) aufweist, welcher Durchgang (8) von einem Rand (9) umschrieben und breiter als der Durchmesser des Schaftes ist;
wobei zwischen dem Rand (9) des Durchgangs (8) und dem Schaft (4) ein Freiraum definiert ist;
wobei der Schaft (4) ein unteres Ende (10) und ein oberes Ende (11) hat;
wobei der Schaft (4) sich mit seinem unteren Ende (10) durch den Durchgang (8) in den Senkkasten hinein erstreckt;
wobei der Schaft (4) durch den Senkkasten (3) an einem unteren Träger (12) und einem oberen Träger (14) gestützt ist;
wobei der obere Träger (14) eine Betonvergussmasse (16) umfasst, die den Freiraum zwischen dem Rand (9) des Durchgangs (8) und der Schaft (4) schließt; und
wobei der obere Träger (14) sich vollständig um den Schaft (4) herum erstreckt und an dem Durchgang (8) angeordnet ist,
**dadurch gekennzeichnet,**
**dass** der obere Träger (14) ferner aufweist:
• radiale Bewehrungsstäbe (17), die um den Schaft (4) herum verteilt sind, die von dem Dach (6) in radialer Richtung nach innen vorstehen, die an dem Dach (6) befestigt und in die Betongussmasse (16) eingebettet sind; und
• radiale Elemente (18), die um den Schaft (4) herum verteilt sind, die von dem Schaft (4) in radialer Richtung nach außen vorstehen, die an dem Schaft (4) befestigt und in die Betongussmasse (16) eingebettet sind;
**dass** die radialen Bewehrungsstäbe (17), die radialen Elemente (18) und die Betonvergussmasse (16) angeordnet sind, um radiale Zugkräfte (T) von den radialen Elementen (18) zu den radialen Bewehrungsstäben (17) zu übertragen, damit die radialen Zugkräfte (T) von dem Schaft auf das Dach (6) übertragen werden; und
**dass** das Dach (6) zur Übertragung der Zugkräfte (T) auf die Seitenwand (7) ausgelegt ist.

2. Fundament (1) nach dem vorhergehenden Anspruch, wobei der obere Träger (14) dazu eingerichtet ist, geeignet zu sein, von dem Schaft (4) auf das Dach (6) einen Betrag an Zugkräften (T) von mindestens 1,5 MN zu übertragen.

3. Fundament (1) nach einem der vorhergehenden Ansprüche, wobei der obere Träger (14) dazu eingerichtet ist, mindestens 10%, vorzugsweise mindestens 15%, einer horizontalen Last (Rᵤₚₚₑᵣ) von 15 MN als Zugkräfte (T) aufzunehmen, wobei diese horizontale Last quer zur Längsrichtung des Schafts (4) gerichtet ist und von dem Schaft (4) auf den oberen Träger (14) ausgeübt wird.

4. Fundament nach einem der vorhergehenden Ansprüche,
wobei, auf Höhe des oberen Trägers (14) gesehen, eine obere Transferlast definiert ist als:
• einwirkend von dem Schaft (4) auf den oberen Träger (14); und
• aufweisend eine oder mehrere Komponenten aus der Gruppe bestehend aus:
∘ einer horizontalen Kraftkomponente (Rᵤₚₚₑᵣ),
∘ einer vertikalen Kraftkomponente (Vᵤₚₚₑᵣ), und
∘ einer horizontalen Momentenkomponente (Mᵤₚₚₑᵣ);
und
wobei der obere Träger (14) zur Verteilung der oberen Transferlast (Rᵤₚₚₑᵣ, Vᵤₚₚₑᵣ, Mᵤₚₚₑᵣ) um den Umfang des oberen Trägers (14) und zur Übertragung dieser oberen, um den Umfang des oberen Trägers (14) verteilten Transferlast (Rᵤₚₚₑᵣ, Vᵤₚₚₑᵣ, Mᵤₚₚₑᵣ) auf das Dach (6) eingerichtet ist mittels einer Kombination von:
• zumindest Zugkräften (T) und Druckkräften (P), die im oberen Träger (14) wirken; und
• optional Scherkräften, die im oberen Träger (14) wirken.

5. Fundament (1) nach Anspruch 4, wobei im Fall einer horizontalen Kraftkomponente (Rᵤₚₚₑᵣ) von 10 MN,
• mindestens 10%, vorzugsweise mindestens 15%, dieser horizontalen Kraftkomponente (Rᵤₚₚₑᵣ) durch den oberen Träger als Zugkräfte (T) aufgenommen wird;
und/oder
• mindestens 7%, vorzugsweise mindestens 10%, dieser horizontalen Kraftkomponente (Rᵤₚₚₑᵣ) durch den oberen Träger als Scherkräfte aufgenommen wird;
und/oder
• mindestens 20%, vorzugsweise mindestens 30%, dieser horizontalen Kraftkomponente (Rᵤₚₚₑᵣ) durch den oberen Träger als Druckkräfte (P) aufgenommen wird;
und/oder
• höchstens 75%, vorzugsweise höchstens 60%, dieser horizontalen Kraftkomponente (Rᵤₚₚₑᵣ) durch den oberen Träger als Zugkräfte (T) aufgenommen wird.

6. Fundament (1) nach einem der vorhergehenden Ansprüche, wobei ein solches radiales Element (18) einen U-förmigen Steg (20) aufweist, der sich in einer radialen Ebene erstreckt.

7. Fundament (1) nach einem der vorhergehenden Ansprüche, wobei ein solches radiales Element (18) mindestens einen L-förmige Stab (21, 22), insbesondere zwei L-förmige Stäbe umfasst, die sich in einer radialen Ebene erstrecken, wobei, im Falle von zwei dieser L-förmigen Stäbe, beide L-förmigen Stäbe (21, 22) ein freies Ende (23, 24) aufweisen, wobei das freie Ende (23) eines der L-förmigen Stäbe (21) in eine Richtung entgegengesetzt zu dem freien Ende (24) des anderen L-förmigen Stabs (22) weist.

8. Fundament (1) nach einem der Ansprüche 1 -5, wobei ein solches radiales Element (18) eine mit dem Schaft (4) verschweißte radiale Rippe (19) aufweist.

9. Fundament (1) nach Anspruch 8, wobei die Rippe (19) mit:
• einer ersten Platte (26) versehen ist, die mit der Rippe (19) verschweißt ist und sich quer zur Rippe (19) und quer zur Zugrichtung erstreckt; und
• einer oder mehreren zweiten Platten (27) versehen ist, die mit der Rippe (19) verschweißt sind und sich quer zur Rippe (19) sowie quer zur ersten Platte (26 erstrecken;
wobei ein U-förmiger Steg (20) nach Anspruch 6 und/oder mindestens ein L-förmiger Stab (21, 22) nach Anspruch 7 an der ersten Platte an der dem Schaft abgewandten Seite der ersten Platte (26) angeordnet sind;
wobei die eine oder die mehreren zweiten Platten (27) die erste Platte (26) an der vom Schaft (4) abgewandten Seite stützen, um ein Biegen der ersten Platte (26) aufgrund von jeweils auf den U-förmigen Steg (20) und/oder eine oder mehrere L-förmige Stangen (21, 22) ausgeübten Zugkräfte (T) zu verhindern.

10. Fundament (1) nach einem der vorhergehenden Ansprüche, wobei, in horizontaler Richtung gesehen, der Querschnitt des Senkkastens (3) eine Kreisform aufweist, und wobei der obere Teil des Senkkastens (3) eine Kegelstumpfform aufweist.

11. Fundament (1) nach einem der vorhergehenden Ansprüche, wobei:
• die Grundfläche des Senkkastens (3) einen Durchmesser grösser als 20 m, insbesondere im Bereich von 30 - 60 m, vorzugsweise von 30 - 40 m hat;
und/oder
• die vertikale Höhe des Schafts (4) grösser ist als 30 m, insbesondere 50 m oder grösser ist;
und/oder
• die vertikale Höhe des Senkkastens (3) grösser als 10 m, insbesondere 15 m oder grösser ist, wie beispielsweise im Bereich von 15 - 25 m liegt;
und/oder
• der Pflock (15) eine vertikale Höhe von 1-4 m, insbesondere 1-2 m oder grösser aufweist.

12. Fundament (1) nach einem der vorhergehenden Ansprüche, wobei das Fundament (1) selbstschwimmfähig ist.

13. Fundament nach einem der vorhergehenden Ansprüche, wobei der untere Träger (12) einen Pflock (15) aus Beton aufweist, und wobei, in einer Ebene quer zum Schaft (4) gesehen, die Außenabmessungen des Pflocks (15) und die Innenabmessungen des unteren Endes (10) des Schafts (4) miteinander in Übereinstimmung sind.

14. Fundament nach Anspruch 13, wobei der Pflock aus der Bodenplatte (5) nach oben in das untere Ende (10) des Schafts (4) vorspringt und als ein mit der Bodenplatte (5) aus Beton des Senkkastens einstückiges Teil (3) ausgebildet ist, so dass der Pflock (15) eine seitliche Abstützung für das untere Ende (10) des Schafts (4) bereitstellt.

15. Offshore-Anlage (2), umfassend ein schwerkraftbasiertes Fundament (1) nach einem der vorhergehenden Ansprüche 1 -14 und eine Windenergieanlage (30), wobei die Windenergieanlage einen vertikalen Turm (31), der eine Turbine (32) an seinem oberen Ende trägt, aufweist, wobei das untere Ende des Turms (31) am oberen Ende (11) des Schafts (4) des Fundaments (1) abgestützt ist.

## Revendications

1. Une fondation basée sur la gravité (1) pour une installation offshore (2),
dans laquelle la fondation (1) comprend un caisson (3) en béton et un arbre (4) en acier ;
dans laquelle le caisson (3) comporte une dalle inférieure (5), un toit (6) et une paroi latérale (7) s'étendant entre la dalle inférieure (5) et le toit (6) pour définir une structure creuse délimitée par la dalle inférieure (5), le toit (6) et la paroi latérale (7);
dans laquelle le toit (6) comporte un passage (8) pour l'arbre (4), lequel passage (8) est circonscrit par une bordure (9) et est plus large que le diamètre de l'arbre ;
dans laquelle un espace est défini entre la bordure (9) du passage (8) et l'arbre (4) ;
dans laquelle l'arbre (4) a une extrémité inférieure (10) et une extrémité supérieure (11) ;
dans laquelle l'arbre (4) s'étend avec son extrémité inférieure (10) à travers le passage (8) dans le caisson (3) ;
dans laquelle l'arbre (4) est supporté par le caisson (3) au niveau d'un support inférieur (12) et d'un support supérieur (14) ;
dans laquelle le support supérieur (14) comprend une coulée de béton (16) fermant l'espace entre la bordure (9) du passage (8) et l'arbre (4); et
dans laquelle le support supérieur (14) s'étend tout autour de l'arbre (4), et est disposé au niveau du passage (8),
**caractérisée**
**en ce que** le support supérieur (14) comprend en outre :
• des barres de renforcement radial (17) distribuées autour de l'arbre (4), s'étend depuis le toit (6) dans une direction radiale vers l'intérieur, fixées au toit (6) et encastrées dans la coulée de béton (16) ;
• des éléments radiaux (18) distribués autour de l'arbre (4), s'étendant depuis l'arbre (4) dans une direction radiale vers l'extérieure, fixés à l'arbre (4) et encastrés dans la coulée de béton (16) ;
**en ce que** les barres de renforcement radial (17), les éléments radiaux (18) et la coulée de béton (16) sont agencés pour transférer des efforts radiaux de traction (T) des éléments radiaux (18) aux barres de renforcement radial (17) afin de transférer les efforts radiaux de traction (T) de l'arbre au toit (6) ; et
**en ce que** le toit (6) est agencé pour transférer les efforts de traction (T) à la paroi latérale (7).

2. Fondation (1) selon la revendication précédente, dans laquelle ledit support supérieur (14) est agencé pour pouvoir transférer, de l'arbre (4) au toit (6), une quantité d'efforts de traction (T) d'au moins 1,5 MN.

3. Fondation (1) selon l'une des revendications précédentes, dans laquelle le support supérieur (14) est agencé pour absorber au moins 10%, comme au moins 15%, d'une charge horizontale (Rᵤₚₚₑᵣ) de 15 MN comme forces de traction (T), dans laquelle ladite charge horizontale est dirigée transversalement à la direction de la longueur de l'arbre (4) et exercée par l'arbre (4) sur le support supérieur (14).

4. Fondation selon l'une des revendications précédentes, dans laquelle, vue au niveau du support supérieur (14), une charge de transfert supérieure est définie comme:
• agissant à partir de l'arbre (4) sur le support supérieur (14) ; et
• comprenant un ou plusieurs composants du groupe de:
∘ une composante de force horizontale (Rᵤₚₚₑᵣ),
∘ une composante de force verticale (Vᵤₚₚₑᵣ), et
∘ une composante de moment horizontal (Mᵤₚₚₑᵣ) ;
et
dans laquelle le support supérieur (14) est agencé pour distribuer ladite charge de transfert supérieure (Rᵤₚₚₑᵣ, Vᵤₚₚₑᵣ, Mᵤₚₚₑᵣ) autour de la circonférence du support supérieur (14) et pour transférer ladite charge de transfert supérieure (Rᵤₚₚₑᵣ, Vᵤₚₚₑᵣ, Mᵤₚₚₑᵣ) distribuée autour de la circonférence du support supérieur (14) vers le toit (6) au moyen d'une combinaison de:
• au moins des forces de traction (T) et des forces de compression (P) agissant dans le support supérieur (14) ; et
• optionnellement, des forces de cisaillement agissant dans le support supérieur (14).

5. Fondation (1) selon la revendication 4, dans laquelle, dans le cas d'une composante de force horizontale (Rᵤₚₚₑᵣ) de 10 MN,
• au moins 10%, comme au moins 15%, de cette composante de force horizontale (Rᵤₚₚₑᵣ) est absorbée en tant que forces de traction (T) par le support supérieur ;
et/ou
• au moins 7%, comme au moins 10%, de cette composante de force horizontale (Rᵤₚₚₑᵣ) est absorbée en tant que forces de cisaillement par le support supérieur ;
et/ou
• au moins 20%, comme au moins 30%, de cette composante de force horizontale (Rᵤₚₚₑᵣ) est absorbée en tant que forces de compression (P) par le support supérieur ;
et/ou
• au plus 75%, comme au plus 60%, de cette composante de force horizontale (Rᵤₚₚₑᵣ) est absorbée en tant que forces de traction (T) par le support supérieur.

6. Fondation (1) selon l'une quelconque des revendications précédentes, dans laquelle un dit élément radial (18) comprend une barre en forme de U (20) s'étendant dans un plan radial.

7. Fondation (1) selon l'une des revendications précédentes, dans laquelle un dit élément radial (18) comprend au moins une barre en forme de L (21, 22), comme deux barres en forme de L, s'étendant dans un plan radial, dans laquelle, dans le cas de deux barres en forme de L, les deux barres en forme de L (21, 22) ont une extrémité libre (23, 24), l'extrémité libre (23) d'une desdites barres en forme de L (21) pointant dans une direction opposée à l'extrémité libre (24) de l'autre desdites barres en forme de L (22).

8. Fondation (1) selon l'une des revendications 1 à 5, dans laquelle ledit élément radial (18) comprend une ailette radiale (19) soudée à l'arbre (4).

9. Fondation (1) selon la revendication 8, dans laquelle l'ailette (19) est pourvue de:
• une première plaque (26) soudée à l'ailette (19) et s'étendant transversalement à l'ailette (19) et transversalement à la direction de traction ; et
• une ou plusieurs secondes plaques (27) soudées à l'ailette (19) et s'étendant transversalement à l'ailette (19) ainsi que transversalement à la première plaque (26),
dans laquelle une barre en forme de U (20) selon la revendication 6 et/ou au moins une barre en forme de L (21, 22) selon revendication 7 sont fixées à la première plaque (26) du côté de la première plaque (26) opposé à l'arbre (4) ;
dans lequel la ou les plusieurs secondes plaques (27) supportent la première plaque (26) sur le côté opposé à l'arbre (4) pour empêcher la flexion de la première plaque (26) due aux forces de traction (T) exercées sur la barre en forme de U (20) et/ou une ou plusieurs barres en forme de L (21, 22), respectivement.

10. Fondation (1) selon l'une des revendications précédentes, dans laquelle, vue en direction horizontale, la section transversale du caisson (3) a une forme circulaire, et dans laquelle la partie supérieure du caisson (3) a une forme tronconique.

11. Fondation (1) selon l'une des revendications précédentes, dans laquelle:
• la surface au sol du caisson (3) a un diamètre supérieur à 20 m, tel que de l'ordre de 30 à 60 m, comme 30 à 40 m ;
et/ou
• la hauteur verticale de l'arbre (4) est supérieure à 30 m, comme 50 m ou plus ;
et/ou
• la hauteur verticale du caisson (3) est supérieure à 10 m, telle que 15 m ou plus, comme dans la gamme de 15 à 25 m;
et/ou
• le bouchon (15) a une hauteur verticale de 1 à 4 m, telle que 1 à 2 m ou plus.

12. Fondation (1) selon l'une des revendications précédentes, dans laquelle la fondation (1) est auto-flottante.

13. Fondation selon l'une des revendications précédentes, dans laquelle le support inférieur (12) comprend un bouchon en béton (15), et dans laquelle, vu dans un plan transversal à l'arbre (4), les dimensions extérieures du bouchon (15) et les dimensions intérieures de l'extrémité inférieure (10) de l'arbre (4) se correspondent mutuellement.

14. Fondation selon la revendication 13, dans laquelle le bouchon dépasse de la dalle inférieure (5) vers le haut dans l'extrémité inférieure (10) de l'arbre (4) et fait partie intégrante de la dalle inférieure en béton (5) du caisson (3) de sorte que le bouchon (15) fournit un support latéral à l'extrémité inférieure (10) de l'arbre (4).

15. Installation offshore (2), comprenant une fondation (1) basée sur la gravité selon l'une des revendications précédentes 1 à 14, et une éolienne (30), l'éolienne comprenant une tour verticale (31) portant une turbine (32) à son extrémité supérieure, dans laquelle l'extrémité inférieure de la tour (31) est supportée par l'extrémité supérieure (11) de l'arbre (4) de la fondation (1).
